# EUROPEAN PATENT SPECIFICATION

(11) **EP 4 119 972 B1**
(45) Date of publication and mention of the grant of the patent: **07.10.2026**
(21) Application number: 21767292.2
(22) Date of filing: 05.03.2021
(51) Int. Cl.: G01S 3/04, G01S 3/48, H01Q 3/24, H01Q 5/42, H01Q 21/06, H04B 7/06, H04B 17/23, H04B 17/29

(54) **RADIO WAVE EMISSION SOURCE VISUALIZING DEVICE, AND BANDWIDTH EXPANSION METHOD**
VORRICHTUNG ZUR VISUALISIERUNG VON FUNKWELLENEMISSIONSQUELLEN UND BANDBREITENEXPANSIONSVERFAHREN
DISPOSITIF DE VISUALISATION DE SOURCE D'ÉMISSION D'ONDES RADIO ET PROCÉDÉ D'EXTENSION DE LARGEUR DE BANDE

(30) Priority: 10.03.2020 JP 2020040595
(43) Date of publication of application: 18.01.2023
(73) Proprietor: KABUSHIKI KAISHA TOSHIBA, Kawasaki-shi, Kanagawa (JP)
(72) Inventor: OKI, Hidemi, Tokyo 105-0023 (JP); KASUGA, Katsuro, Kawasaki-shi, Kanagawa 212-0001 (JP); MURAKAMI, Terumitsu, Kawasaki-shi, Kanagawa 212-0001 (JP)
(74) Representative: Hoffmann Eitle
(86) International application number: PCT/JP2021/008795
(87) International publication number: WO 2021/182347

(56) References cited:
- WO-A1-2019/026374
- JP-A- 2001 183 437
- JP-A- 2007 240 445
- JP-A- 2012 047 473
- JP-A- 2012 047 473
- KR-A- 20150 122 967
- US-A1- 2005 146 481
- US-A1- 2010 283 702
- US-A1- 2014 036 065
- US-A1- 2016 087 349
- US-A1- 2017 170 563

## Description

### FIELD

Embodiments described herein relate generally to a radio wave emission source visualization apparatus and a band expansion method.

### BACKGROUND

A radio wave emission source visualization apparatus can specify a radiation position of a radio wave in a desired band and display it so as to be superimposed on a camera image. For example, since it can pinpoint illegal radio waves and their position can be displayed, it is operated in public service agencies, etc. Since the illegal radio waves are transmitted at various frequencies, it is required to expand a frequency band that can be captured.

### CITATION LIST

### PATENT LITERATURES

Patent Literature 1: Japanese Patent Application KOKAI Publication No. 2005-322972
Patent Literature 2: Japanese Patent Application KOKAI Publication No. 2009-232213
Patent Literature 3: Japanese Patent Application KOKAI Publication No. 2012-78163
Patent Literature 4: US 2014/036065 A1
Patent Literature 5: US 2016/087349 A1
Patent Literature 6: US 2017/170563 A1
Patent Literature 7: US 2010/283702 A1
Patent Literature 8: US 2005/146481 A1
Patent Literature 9: JP 2012 047473 A

### SUMMARY

### TECHNICAL PROBLEM

In this type of apparatus, it is considered sufficient to cover at most 700 MHz to 1500 MHz; however, in recent years, in addition to this, the apparatus is required to be able to cover a band of 1400 MHz to 2700 MHz. That is, while a band of one octave has been sufficient conventionally, an apparatus capable of covering a band of two octaves at once is required.

However, as is well known, in an array antenna 2, an arrangement at intervals of λ/2 with respect to a reception wavelength (λ) is ideal, and if an element interval is λ/2 or less, a peak of a visualization processing output becomes broad, and it becomes difficult to specify a radiation position. If λ becomes close to the element interval, the peak of the visualization processing output becomes sharp, but a virtual image also appears. As described above, in a target band of the radio wave emission source visualization apparatus, conditions related to an antenna design are strict, and it is difficult to widen the band.

Accordingly, an object of the present invention is to provide a radio wave emission source visualization apparatus and a band expansion method for achieving a wider band.

### SOLUTION TO PROBLEM

The present invention is defined by the independent claims. Preferred embodiments are defined by the dependent claims. Further aspects are provided for facilitating the understanding of the invention.

In general, according to one embodiment, a radio wave emission source visualization apparatus includes an antenna unit, a selection unit, an estimation unit, an imaging unit and a creation unit. The antenna unit includes N (N is a natural number of 2 or more) antenna elements arranged in an array and captures an incoming wave. The selection unit selects an antenna element group including M (M is a natural number of N or less) antenna elements from the N antenna elements according to a band of the incoming wave. The estimation unit estimates an incoming direction of the incoming wave from an element signal of each of the antenna elements included in the selected antenna element group. The imaging unit acquires image data by imaging an orientation direction of an aperture of the antenna unit. The creation unit creates a visualized image by visually synthesizing the estimated incoming direction with the image data.

### BRIEF DESCRIPTION OF THE DRAWINGS

FIG. 1 is a functional block diagram showing an example of a radio wave emission source visualization apparatus according to an embodiment.
FIG. 2 is a diagram showing an example of display in a display 13 in FIG. 1.
FIG. 3 is a diagram showing an example of an array antenna 2 viewed from an aperture face.
FIG. 4 is a diagram showing an example of antenna elements selected when capturing a band on a low frequency side.
FIG. 5 is a diagram showing an example of antenna elements selected when capturing a band on a high frequency side.
FIG. 6 is a diagram for explaining that a plurality of antenna element groups can be formed.

### DETAILED DESCRIPTION

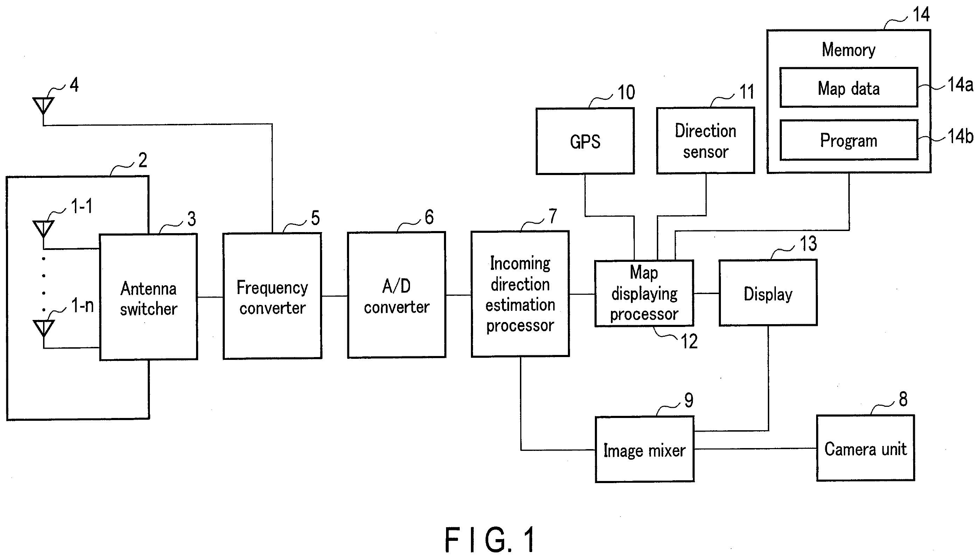

FIG. 1 is a functional block diagram showing an example of a radio wave emission source visualization apparatus according to an embodiment. The radio wave emission source visualization apparatus of FIG. 1 includes an array antenna 2, an antenna switcher 3, a reference antenna 4, a frequency converter 5, an A/D (analog/digital) converter 6, an incoming direction estimation processor 7, a camera unit 8, an image mixer 9, a GPS receiver 10, a direction sensor 11, a map displaying processor 12, a display 13, and a memory 14.

The array antenna 2 includes N (N is a natural number of 2 or more) antenna elements 1-1 to 1-n arranged in an array, and captures radio waves (incoming waves) from a radio wave emission source. The antenna switcher 3 is, for example, a switching element such as a diode switch, and selectively switches the antenna elements 1-1 to 1-n according to a band of an incoming wave to be captured. That is, the antenna switcher 3 selects an antenna element group including M (M is a natural number of N or less) antenna elements from the antenna elements 1-1 to 1-n according to the band of the incoming wave.

The antenna elements 1-1 to 1-n and the reference antenna 4 all capture incoming waves in the same band and output element signals. The shape and type of the array antenna 2, the total number of antenna elements, intervals between the antenna elements 1-1 to 1-n, etc. are optimized according to a measurement target, a measurement purpose, etc.

If any one of the antenna elements 1-1 to 1-n is used as the reference antenna 4, a structure for separately attaching the reference antenna 4 can be omitted, which can contribute to reduction in size and weight.

The frequency converter 5 amplifies each element signal from the reference antenna 4 and the array antenna 2, and performs frequency conversion to an intermediate frequency band in which sampling is possible. The A/D converter 6 converts an analog signal frequency-converted by the frequency converter 5 into a digital signal.

The incoming direction estimation processor 7 estimates an incoming direction of an incoming wave captured by the array antenna 2. Specifically, the incoming direction estimation processor 7 detects a phase difference between an element signal of the reference antenna 4 and an element signal of each antenna element included in a selected antenna element group, and estimates the incoming direction of the incoming wave by, for example, a radio holography method. The incoming direction of the incoming wave estimated by the incoming direction estimation processor 7 indicates relative azimuth angle and elevation angle with respect to the direction of the array antenna 2.

The camera unit 8 is installed in the vicinity of the array antenna 2, and acquires image data by photographing an orientation direction of the aperture of the array antenna 2. If a mounting position of the camera unit 8 is away from a phase center of the array antenna 2, an accurate visualized image can be acquired by correcting a parallax.

The image mixer 9 generates a visualized image by visually synthesizing the incoming direction of the incoming wave estimated by the incoming direction estimation processor 7 with the image data acquired by the camera unit 8. That is, the image mixer 9 creates a visualized image by synthesizing an electric field intensity distribution on a two-dimensional plane of the incoming wave with the image data.

The GPS receiver 10 acquires position information of the array antenna 2. Specifically, the GPS receiver 10 receives a positioning signal from a GPS (Global Positioning System) satellite, and acquires position information such as latitude and longitude of the array antenna 2. The direction sensor 11 is, for example, a magnetic direction sensor, and acquires direction information of the array antenna 2 using geomagnetism.

The map displaying processor 12 acquires map information around the array antenna 2 based on the position information acquired by the GPS receiver 10. The map information can be acquired from map data 14a stored in advance in the memory 14. Alternatively, the map information may be acquired from a network such as the Internet.

The display 13 is, for example, a liquid crystal display (LCD), and displays a map indicating the incoming direction of the incoming wave received by the array antenna 2 and the position of the array antenna 2 based on the map information output by the map displaying processor 12. Further, the display 13 displays the visualized image generated by the image mixer 9.

Various controls for the array antenna 2, antenna switcher 3, reference antenna 4, frequency converter 5, A/D (analog/digital) converter 6, incoming direction estimation processor 7, camera unit 8, image mixer 9, GPS receiver 10, direction sensor 11, map displaying processor 12, and display 13, or arithmetic processing by software is realized by a program 14b stored in the memory 14.

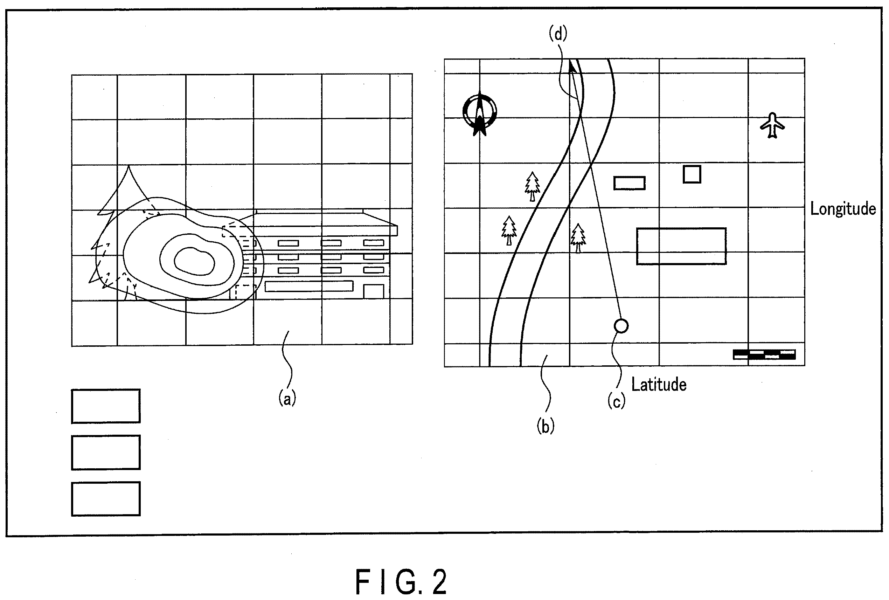

FIG. 2 is a diagram showing an example of display on the display 13 in FIG. 1. The display 13 displays, for example, a camera window (a) and a map window (b).

The camera window (a) displays a superimposed image in which distribution of electric field intensity of an incoming wave on a two-dimensional plane is synthesized with an image captured by the camera unit 8. In the camera window (a), the electric field intensity of the estimated incoming wave is drawn approximately on contour lines around an incoming direction estimated by the incoming direction estimation processor 7. An image (color map) created with different display colors according to the electric field intensity may be displayed.

In the map window (b), a position (c) of the radio wave emission source visualization apparatus acquired by the GPS receiver 10 is displayed by being superimposed on the peripheral map acquired from the map data 14a. Further, in the map window (b), an arrow is drawn from the position (c) of the radio wave emission source visualization apparatus to a position (d) of a radio wave emission source. According to the map window (b), this arrow indicates that the radio wave emission source is located slightly to the left of a person searching. This also corresponds to the visualization screen (a).

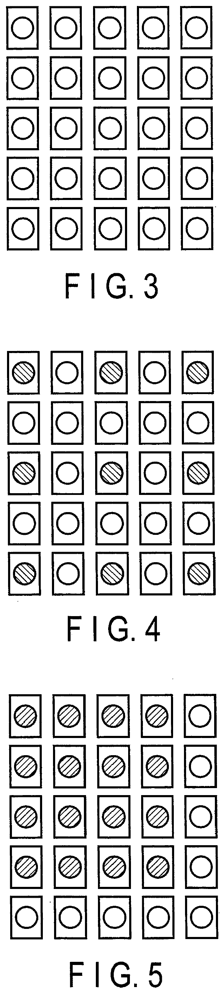

FIG. 3 is a diagram showing an example of the array antenna 2 viewed from the aperture face. The array antenna may have, for example, 25 antenna elements of 5 rows by 5 columns.

Here, consider capturing an incoming wave in a band ranging from 700 MHz to 2700 MHz, for example. In the existing technology, for example, it is necessary to divide the band as shown in the following (1) and (2) and to provide a dedicated array antenna for each band.
(1) 700 MHz to 1500 MHz
(2) 1400 MHz to 2700 MHz

Therefore, in the embodiment, a broadband antenna that covers the frequency bands (1) and (2) is used, and an antenna array is selected from a plurality of antenna arrays according to the reception frequency so that the element interval can be optimized.

As shown in FIG. 4, when the band (1) is captured, a 3 × 3 array of antenna elements indicated by hatching (hatched lines) in the figure is selected, and an incoming radio wave direction is calculated from an element signal from each antenna element of this antenna element group. On the other hand, when the band (2) is captured, a 4 × 4 array of antenna elements indicated by hatching (hatched lines) in FIG. 5 is selected, and an incoming radio wave direction is calculated from an element signal from each antenna element of this antenna element group.

In this way, by selecting the antenna elements according to the band of the incoming wave to be captured and switching the antenna array, the intervals between the antenna elements can be adaptively set. As a result, two array antennas are integrated into one array antenna, and it is possible to observe an incoming broadband wave extending from 700 MHz to 2700 MHz, for example, using the common array antenna.

In the array antenna, an array arrangement at intervals of λ/2 with respect to a reception wavelength (λ) is ideal. If the element interval is λ/2 or less, a peak of a visualization processing output becomes broad and it becomes difficult to specify a radiation position. Further, if λ becomes close to the element interval, the peak of the visualization processing output becomes sharp, but a virtual image is also displayed. Thus, in the existing technology, an upper limit of a reception frequency range is a frequency twice that of a lower limit frequency, and the antenna elements are arranged in an array at intervals of λ/2 with respect to a wavelength at a center frequency. For this reason, the receivable band is naturally limited.

In contrast, in the embodiment, the antenna switcher 3 selects an antenna element group including antenna elements arranged at about half-wave intervals with respect to the wavelength of the incoming wave, so that the incoming wave can be captured by the antenna elements arranged in an array at the intervals of λ/2 with respect to the reception wavelength λ. For these reasons, according to the embodiment, it is possible to provide a radio wave emission source visualization apparatus and a band expansion method that achieve a wider band.

Note that the present invention is not limited to the embodiment described above. For example, the display 13 can be realized by a screen of a notebook personal computer separate from the radio wave emission source visualization apparatus. Alternatively, it may be a screen of a tablet. Further, the camera window (a) and the map window (b) do not need to be displayed together on the same screen, and the screen may be switched in response to a user's operation or the like.

The display method by the display 13 is not limited to the above-described method, and various modifications can be made. For example, the display 13 may display the incoming radio wave direction in the camera window (a) with a number, a symbol, a mark, or the like other than the color corresponding to the electric field intensity. Further, the display 13 may use a map in which various pieces of information other than buildings are described in the map window (b).

Further, it is also possible to take measures against multipath propagation.

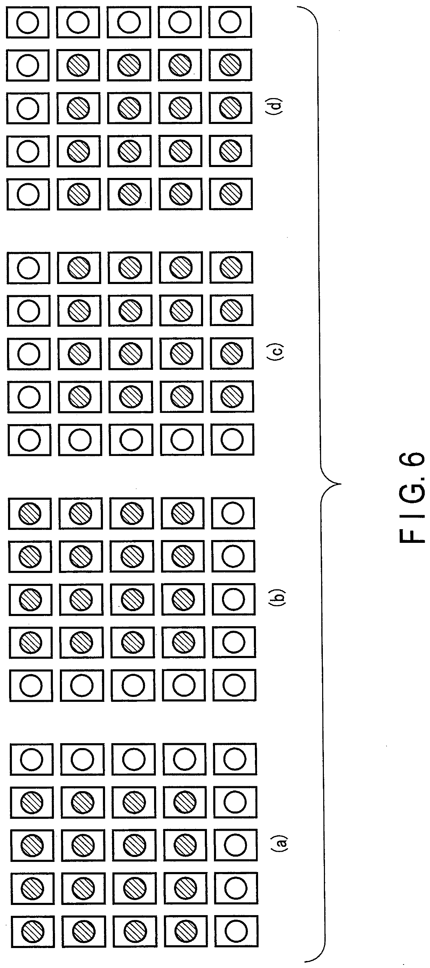

FIG. 6 is a diagram for explaining that a plurality of antenna element groups can be formed. In the 5 × 5 array antenna, as shown in FIGS. 6 (a), 6 (b), 6 (c), and 6 (d), the 4 × 4 array antenna element group can be switched in four ways. The antenna switcher 3 selectively switches these plurality of antenna element groups, and switches and outputs the element signals from the antenna element groups. Then, the incoming direction estimation processor 7 averages the element signals from the antenna element groups to estimate an incoming direction of an incoming wave. In this way, it is possible to average and cancel an influence of multipath propagation generated in each antenna element group. As a result, it is possible to enhance resistance to an environment in which multipath propagation is likely to occur, such as an urban area.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions as defined by the claims. The accompanying claims are intended to cover such forms or modifications as would fall within the scope of the inventions as defined by the claims.

## Claims

1. A radio wave emission source visualization apparatus comprising:
an antenna unit (2) including antenna elements of N rows by N columns (N is a natural number of 2 or more) arranged in an array and configured to capture an incoming wave;
a reference antenna (4) configured to capture the incoming wave; a selection unit (3) configured to select an antenna element group from a plurality of different antenna element groups, each of the antenna element groups including antenna elements of M rows by M columns (M is a natural number less than N) from the antenna elements of N rows by N columns according to a band of the incoming wave;
an estimation unit (7) configured to estimate an incoming direction of the incoming wave from an element signal of each of the antenna elements included in the selected antenna element group and an element signal of the reference antenna;
an imaging unit (8) configured to acquire image data by imaging an orientation direction of an aperture of the antenna unit (2); and
a creation unit (9) configured to create a visualized image by visually synthesizing the estimated incoming direction with the image data.

2. The radio wave emission source visualization apparatus according to claim 1, wherein the antenna elements of the selected antenna element group are arranged at about half-wave intervals with respect to a wavelength of the incoming wave.

3. The radio wave emission source visualization apparatus according to claim 1,
wherein the creation unit (9) is configured to create the visualized image by synthesizing an electric field intensity distribution of the incoming wave on a two-dimensional plane with the image data.

4. The radio wave emission source visualization apparatus according to claim 1, wherein
the selection unit (3) is configured to switch and output element signals from the plurality of different antenna element groups, and
the estimation unit (7) is configured to estimate the incoming direction by averaging the element signals from the antenna element groups.

5. The radio wave emission source visualization apparatus according to any one of claims 1 to 4, further comprising a display (13) configured to display the visualized image.

6. A method for expanding a band of a radio wave emission source visualization apparatus comprising antenna elements of N rows by N columns (N is a natural number of 2 or more) arranged in an array and an antenna unit configured to capture an incoming wave and a reference antenna configured to capture the incoming wave, the method comprising:
selecting, by the radio wave emission source visualization apparatus, an antenna element group from a plurality of different antenna element groups, each of the antenna element groups including antenna elements of M rows by M columns (M is a natural number less than N) from the antenna elements of N rows by N columns according to a band of the incoming wave;
estimating, by the radio wave emission source visualization apparatus, an incoming direction of the incoming wave from an element signal of each of the antenna elements included in the selected antenna element group and an element signal of the reference antenna;
acquiring, by the radio wave emission source visualization apparatus, image data by imaging an orientation direction of an aperture of the antenna unit by an imaging unit; and
creating, by the radio wave emission source visualization apparatus, a visualized image by visually synthesizing the estimated incoming direction with the image data.

7. The band expansion method according to claim 6, wherein the antenna elements of the selected antenna element group are arranged at about half-wave intervals with respect to a wavelength of the incoming wave.

8. The band expansion method according to claim 6, wherein the radio wave emission source visualization apparatus creates the visualized image by synthesizing an electric field intensity distribution of the incoming wave on a two-dimensional plane with the image data.

9. The band expansion method according to claim 6, comprising:
switching and outputting, by the radio wave emission source visualization apparatus, element signals from the plurality of different antenna element groups; and
estimating, by the radio wave emission source visualization apparatus, the incoming direction by averaging the element signals from the antenna element groups.

10. The band expansion method according to any one of claims 6 to 9, further comprising displaying the visualized image on a display.

## Patentansprüche

1. Vorrichtung zur Visualisierung einer Funkwellenemissionsquelle, umfassend:
eine Antenneneinheit (2), die Antennenelemente in einer Anordnung von N Reihen mal N Spalten aufweist, wobei N eine natürliche Zahl größer oder gleich 2 ist, und dazu konfiguriert ist, eine einfallende Welle zu erfassen;
eine Referenzantenne (4), die dazu konfiguriert ist, die einfallende Welle zu erfassen;
eine Auswahleinheit (3), die dazu konfiguriert ist, entsprechend einem Band der einfallenden Welle eine Antennenelementgruppe aus einer Vielzahl unterschiedlicher Antennenelementgruppen auszuwählen, wobei jede der Antennenelementgruppen von den Antennenelementen in N Reihen mal N Spalten Antennenelemente in M Reihen mal M Spalten umfasst, wobei M eine natürliche Zahl kleiner als N ist;
eine Schätzeinheit (7), die dazu konfiguriert ist, eine Einfallsrichtung der einfallenden Welle anhand eines Elementsignals jedes der in der ausgewählten Antennenelementgruppe enthaltenen Antennenelemente und eines Elementsignals der Referenzantenne zu schätzen;
eine Abbildungseinheit (8), die dazu konfiguriert ist, Bilddaten durch Abbilden einer Ausrichtungsrichtung einer Apertur der Antenneneinheit (2) zu erfassen; und
eine Erzeugungseinheit (9), die dazu konfiguriert ist, ein visualisiertes Bild zu erzeugen, indem sie die geschätzte Einfallsrichtung visuell mit den Bilddaten synthetisiert.

2. Vorrichtung zur Visualisierung einer Funkwellenemissionsquelle nach Anspruch 1, wobei die Antennenelemente der ausgewählten Antennenelementgruppe in Abständen von etwa einer halben Wellenlänge der einfallenden Welle angeordnet sind.

3. Vorrichtung zur Visualisierung einer Funkwellenemissionsquelle nach Anspruch 1, wobei die Erzeugungseinheit (9) dazu konfiguriert ist, das visualisierte Bild zu erzeugen, indem sie eine elektrische Feldstärkenverteilung der einfallenden Welle auf einer zweidimensionalen Ebene mit den Bilddaten synthetisiert.

4. Vorrichtung zur Visualisierung einer Funkwellenemissionsquelle nach Anspruch 1, wobei
die Auswahleinheit (3) dazu konfiguriert ist, Elementsignale aus der Vielzahl unterschiedlicher Antennenelementgruppen umzuschalten und auszugeben, und
die Schätzeinheit (7) dazu konfiguriert ist, die Einfallsrichtung durch Mittelwertbildung der Elementsignale aus den Antennenelementgruppen zu schätzen.

5. Vorrichtung zur Visualisierung einer Funkwellenemissionsquelle nach einem der Ansprüche 1 bis 4, ferner umfassend eine Anzeige (13), die dazu konfiguriert ist, das visualisierte Bild anzuzeigen.

6. Verfahren zum Erweitern eines Bandes einer Vorrichtung zur Visualisierung einer Funkwellenemissionsquelle, wobei die Vorrichtung Antennenelemente in einer Anordnung von N Reihen mal N Spalten, wobei N eine natürliche Zahl größer oder gleich 2 ist, eine Antenneneinheit, die dazu konfiguriert ist, eine einfallende Welle zu erfassen, und eine Referenzantenne, die dazu konfiguriert ist, die einfallende Welle zu erfassen, umfasst, wobei das Verfahren umfasst:
Auswählen, durch die Vorrichtung zur Visualisierung einer Funkwellenemissionsquelle, einer Antennenelementgruppe aus einer Vielzahl unterschiedlicher Antennenelementgruppen, wobei jede der Antennenelementgruppen von den Antennenelementen in N Reihen mal N Spalten Antennenelemente in M Reihen mal M Spalten umfasst, wobei M eine natürliche Zahl kleiner als N ist, entsprechend einem Band der einfallenden Welle;
Schätzen, durch die Vorrichtung zur Visualisierung einer Funkwellenemissionsquelle, einer Einfallsrichtung der einfallenden Welle anhand eines Elementsignals jedes der in der ausgewählten Antennenelementgruppe enthaltenen Antennenelemente und eines Elementsignals der Referenzantenne;
Erfassen, durch die Vorrichtung zur Visualisierung einer Funkwellenemissionsquelle, von Bilddaten durch Abbilden einer Ausrichtungsrichtung einer Apertur der Antenneneinheit mittels einer Abbildungseinheit; und
Erzeugen, durch die Vorrichtung zur Visualisierung einer Funkwellenemissionsquelle, eines visualisierten Bildes durch visuelles Synthetisieren der geschätzten Einfallsrichtung mit den Bilddaten.

7. Banderweiterungsverfahren nach Anspruch 6, wobei die Antennenelemente der ausgewählten Antennenelementgruppe in Abständen von etwa einer halben Wellenlänge der einfallenden Welle angeordnet sind.

8. Banderweiterungsverfahren nach Anspruch 6, wobei die Vorrichtung zur Visualisierung einer Funkwellenemissionsquelle das visualisierte Bild erzeugt, indem sie eine elektrische Feldstärkenverteilung der einfallenden Welle auf einer zweidimensionalen Ebene mit den Bilddaten synthetisiert.

9. Banderweiterungsverfahren nach Anspruch 6, umfassend:
Umschalten und Ausgeben, durch die Vorrichtung zur Visualisierung einer Funkwellenemissionsquelle, von Elementsignalen aus der Vielzahl unterschiedlicher Antennenelementgruppen; und
Schätzen, durch die Vorrichtung zur Visualisierung einer Funkwellenemissionsquelle, der Einfallsrichtung durch Mittelwertbildung der Elementsignale aus den Antennenelementgruppen.

10. Banderweiterungsverfahren nach einem der Ansprüche 6 bis 9, ferner umfassend das Anzeigen des visualisierten Bildes auf einer Anzeige.

## Revendications

1. Dispositif de visualisation de source d'émission d'onde radio comprenant :
une unité d'antenne (2) comprenant des éléments d'antenne disposés en N rangées par N colonnes (N étant un nombre naturel égal ou supérieur à 2) disposés en un réseau et configurée pour capter une onde entrante ;
une antenne de référence (4) configurée pour capter l'onde entrante ;
une unité de sélection (3) configurée pour sélectionner un groupe d'éléments d'antenne parmi une pluralité de groupes d'éléments d'antenne différents, chacun des groupes d'éléments d'antenne comprenant des éléments d'antenne disposés en M rangées par M colonnes (M étant un nombre naturel inférieur à N) à partir des éléments d'antenne disposés en N rangées par N colonnes, en fonction d'une bande de l'onde entrante ;
une unité d'estimation (7) configurée pour estimer une direction d'arrivée de l'onde entrante à partir d'un signal d'élément de chacun des éléments d'antenne inclus dans le groupe d'éléments d'antenne sélectionné et d'un signal d'élément de l'antenne de référence ;
une unité d'imagerie (8) configurée pour acquérir des données d'image en formant une image d'une direction d'orientation d'une ouverture de l'unité d'antenne (2) ; et
une unité de création (9) configurée pour créer une image visualisée en synthétisant visuellement la direction d'arrivée estimée avec les données d'image.

2. Dispositif de visualisation de source d'émission d'onde radio selon la revendication 1, dans lequel les éléments d'antenne du groupe d'éléments d'antenne sélectionné sont disposés à des intervalles d'environ une demi-onde par rapport à une longueur d'onde de l'onde entrante.

3. Dispositif de visualisation de source d'émission d'onde radio selon la revendication 1, dans lequel l'unité de création (9) est configurée pour créer l'image visualisée en synthétisant une distribution d'intensité de champ électrique de l'onde entrante sur un plan bidimensionnel avec les données d'image.

4. Dispositif de visualisation de source d'émission d'onde radio selon la revendication 1, dans lequel
l'unité de sélection (3) est configurée pour commuter et délivrer des signaux d'éléments provenant de la pluralité de groupes d'éléments d'antenne différents, et
l'unité d'estimation (7) est configurée pour estimer la direction d'arrivée en calculant une moyenne des signaux d'éléments provenant des groupes d'éléments d'antenne.

5. Dispositif de visualisation de source d'émission d'onde radio selon l'une quelconque des revendications 1 à 4, comprenant en outre un écran (13) configuré pour afficher l'image visualisée.

6. Procédé d'extension d'une bande d'un dispositif de visualisation de source d'émission d'onde radio comprenant des éléments d'antenne disposés en N rangées par N colonnes (N étant un nombre naturel égal ou supérieur à 2) disposés en un réseau et une unité d'antenne configurée pour capter une onde entrante et une antenne de référence configurée pour capter l'onde entrante, le procédé comprenant :
la sélection, par le dispositif de visualisation de source d'émission d'onde radio, d'un groupe d'éléments d'antenne à partir d'une pluralité de groupes d'éléments d'antenne différents, chacun des groupes d'éléments d'antenne comprenant des éléments d'antenne disposés en M rangées par M colonnes (M étant un nombre naturel inférieur à N) à partir des éléments d'antenne disposés en N rangées par N colonnes, en fonction d'une bande de l'onde entrante ;
l'estimation, par le dispositif de visualisation de source d'émission d'onde radio, d'une direction d'arrivée de l'onde entrante à partir d'un signal d'élément de chacun des éléments d'antenne inclus dans le groupe d'éléments d'antenne sélectionné et d'un signal d'élément de l'antenne de référence ;
l'acquisition, par le dispositif de visualisation de source d'émission d'onde radio, de données d'image en formant une image d'une direction d'orientation d'une ouverture de l'unité d'antenne à l'aide d'une unité d'imagerie ; et
la création, par le dispositif de visualisation de source d'émission d'onde radio, d'une image visualisée en synthétisant visuellement la direction d'arrivée estimée avec les données d'image.

7. Procédé d'extension de bande selon la revendication 6, dans lequel les éléments d'antenne du groupe d'éléments d'antenne sélectionné sont disposés à des intervalles d'environ une demi-onde par rapport à une longueur d'onde de l'onde entrante.

8. Procédé d'extension de bande selon la revendication 6, dans lequel le dispositif de visualisation de source d'émission d'onde radio crée l'image visualisée en synthétisant une distribution d'intensité de champ électrique de l'onde entrante sur un plan bidimensionnel avec les données d'image.

9. Procédé d'extension de bande selon la revendication 6, comprenant :
la commutation et la délivrance, par le dispositif de visualisation de source d'émission d'onde radio, de signaux d'éléments provenant de la pluralité de groupes d'éléments d'antenne différents ; et
l'estimation, par le dispositif de visualisation de source d'émission d'onde radio, de la direction d'arrivée en calculant une moyenne des signaux d'éléments provenant des groupes d'éléments d'antenne.

10. Procédé d'extension de bande selon l'une quelconque des revendications 6 à 9, comprenant en outre l'affichage de l'image visualisée sur un écran.
